# DEMANDE DE BREVET EUROPEEN

(11) **EP 4 438 372 A2**
(43) Date de publication de la demande: **02.10.2024**
(21) Numéro de dépôt: 24159383.9
(22) Date de dépôt: 23.02.2024
(51) Int. Cl.: B60K 35/00, B60K 35/22, B60R 13/02, B60K 35/50

(54) **ASSEMBLAGE POUR PLANCHE DE BORD AVEC MOYENS DE RETENUE**

(30) Priorité: 28.03.2023 FR 2302923
(71) Demandeur: Stellantis Auto SAS, 78300 Poissy (FR)
(72) Inventeur: HERMEN, Frederic, 25200 MONTBELIARD (FR)

(57) **Abrégé**

L'invention concerne un assemblage (1) pour une planche de bord (2) d'un véhicule automobile comprenant au moins un élément d'habillage (3), chacun étant conçu pour former une partie de l'habillage de la planche de bord (2) et pour être fixé à la planche de bord (2) par des moyens de fixation (4), l'assemblage (1) comprenant en outre un élément structurel (7) conçu pour être disposé dans la planche de bord (2), l'assemblage (1) comprenant des moyens de retenue (10) conçus pour relier chaque élément d'habillage (3) à l'élément structurel (7) de sorte à limiter l'éloignement de chaque élément d'habillage (3) par rapport à l'élément structurel (7) pour limiter ses déplacements dans l'habitacle en cas de rupture des moyens de fixation (4), lorsque l'assemblage (1) est monté sur la planche de bord (2).

## Description

Le domaine technique concerne les assemblages formés d'un élément d'habillage et d'un élément structurel d'une planche de bord, les planches de bord comprenant de tels assemblages et les véhicules équipés d'une telle planche de bord.

En matière de sécurité routière, les constructeurs d'automobiles doivent prendre en compte de multiples préoccupations et réglementations lors du développement de nouveaux véhicules. Ainsi, les constructeurs d'automobiles doivent assurer la sécurité des passagers du véhicule en cas de collision. Afin de garantir la sécurité des passagers, les véhicules sont soumis à diverses procédures normalisées de simulations de chocs contre un obstacle rigide impactant le véhicule.

Les procédures normalisées sont, par exemple, décrites par l'organisme international Euro NCAP.

Le comportement des véhicules automobiles dans ces situations est réglementé et testé et les exigences en termes de résultats à ces tests sont toujours plus nombreuses, plus difficiles à satisfaire et obligent les constructeurs d'automobiles à innover constamment.

Il est parfois observé que, lors d'un choc, certaines pièces disposées dans l'habitacle peuvent se détacher, le plus souvent à cause de la rupture de leurs fixations, et être ainsi projetées dans l'habitacle. Une telle pièce, qualifiée de pièce volante, est évidemment susceptible de provoquer des blessures aux occupants du véhicule. Pour cette raison, certaines procédures de simulations exigent de minimiser les pièces volantes résultant d'un choc ou voire interdisent les pièces volantes.

Dans ce contexte, certains véhicules comportent des inserts disposés sous un écran pour permettre de reposer les doigts dessus, afin de maintenir la main au niveau de l'écran, pour faciliter l'entrée de données à l'écran. L'expérience a montré que lors d'une procédure normalisée de simulation d'un choc, les inserts sont susceptibles d'être éjectés dans l'habitacle du véhicule.

Ainsi, il existe un besoin d'une solution permettant de sécuriser certaines pièces et notamment de tels inserts pour éviter leur projection dans l'habitacle.

La présente invention a pour objet de pallier les problèmes exposés précédemment. Dans ce contexte technique, un but de la présente invention est de fournir un assemblage comprenant un élément d'habillage et un élément structurel permettant d'éviter à l'élément d'habillage d'être transformé en projectile dans l'habitacle.

A cet effet, la présente invention se rapporte à un assemblage pour une planche de bord d'un véhicule automobile comprenant au moins un élément d'habillage, chacun étant conçu pour former une partie de l'habillage de la planche de bord et pour être fixé à la planche de bord par des moyens de fixation, l'assemblage comprenant en outre un élément structurel conçu pour être disposé dans la planche de bord, l'assemblage comprenant des moyens de retenue conçus pour relier chaque élément d'habillage à l'élément structurel de sorte à limiter l'éloignement de chaque élément d'habillage par rapport à l'élément structurel pour limiter ses déplacements dans l'habitacle en cas de rupture des moyens de fixation, lorsque l'assemblage est monté sur la planche de bord.

L'invention concerne également une planche de bord comprenant au moins un assemblage selon l'invention, l'élément structurel étant fixé dans la planche de bord.

L'invention concerne enfin un véhicule automobile comprenant une planche de bord selon l'invention.

Ainsi, l'assemblage selon l'invention permet de sécuriser l'élément d'habillage en le reliant à l'élément structurel. En effet, en cas de rupture des moyens de fixation lors d'une procédure normalisée, l'élément d'habillage se retrouve désolidarisé de la planche de bord. Grâce aux moyens de retenue, l'éloignement de l'élément d'habillage est limité puisqu'il reste relié à l'élément structurel pour éviter qu'il ne devienne un projectile. Par limiter l'éloignement, il est entendu que l'élément d'habillage peut se déplacer de quelques centimètres au maximum.

Selon un mode de réalisation de l'invention, les moyens de retenue comprennent une première languette faisant saillie d'un des éléments d'habillage et structurel et présentant un orifice pour permettre l'introduction d'une deuxième languette des moyens de retenue faisant saillie de l'autre des éléments d'habillage et structurel.

Avantageusement, la deuxième languette présente une extrémité libre formant un harpon.

Selon une possibilité, les première et deuxième languettes s'étendent perpendiculairement l'une à l'autre dans l'assemblage.

Dans un mode de réalisation de l'assemblage selon l'invention, un élément d'habillage est un insert pour reposer les doigts conçu pour s'étendre sur au moins une partie d'un pourtour d'un écran.

L'invention sera mieux comprise à la lecture de la description détaillée qui va suivre, donnée uniquement à titre d'exemple non limitatif et faite en se référant au dessin annexé sur lequel :

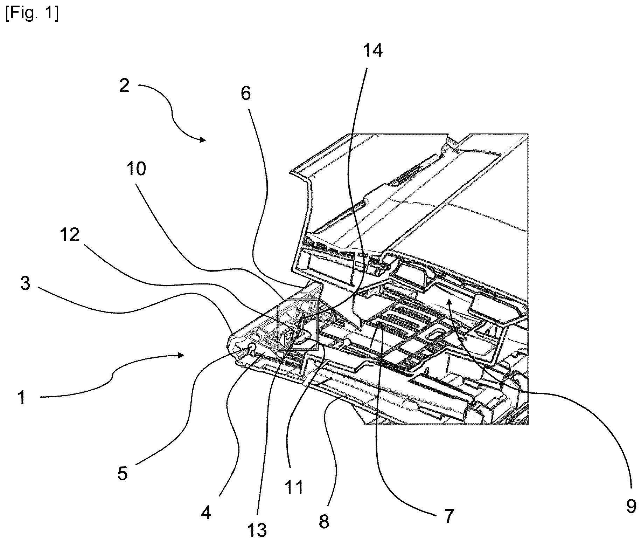

[Fig. 1] la figure 1, représente une vue en perspective des moyens de retenue d'un assemblage selon l'invention.

Un assemblage 1 selon l'invention, illustré sur la figure, est destiné à être monté une planche de bord 2 d'un véhicule automobile.

L'assemblage 1 selon l'invention comprend au moins un élément d'habillage 3, partiellement illustré sur la figure, chacun étant conçu pour former une partie de l'habillage de la planche de bord 2 et pour être fixé à la planche de bord 2 par des moyens de fixation 4. Les moyens de fixation 4 sont, par exemple, des pattes de clippage 5, illustrés partiellement sur la figure. Les moyens de fixation 4 permettent, par exemple, une fixation par clippage sur l'élément structurel 7 ou sur toute autre pièce de la planche de bord 2.

L'élément d'habillage 3 est, par exemple, un insert 6 pour reposer les doigts, conçu pour s'étendre sur au moins un pourtour d'un écran, non représenté sur la figure.

L'assemblage 1 comprend en outre un élément structurel 7 conçu pour être disposé dans la planche de bord 2. Dans l'exemple illustré sur la figure, l'élément structurel 7 est une façade inférieure 8 conçue pour fermer en partie un logement 9 destiné à recevoir l'écran.

L'assemblage 1 comprend des moyens de retenue 10 conçus pour relier chaque élément d'habillage 3 à l'élément structurel 7 de sorte à limiter l'éloignement de chaque élément d'habillage 3 par rapport à l'élément structurel 7, pour limiter ses déplacements dans l'habitacle en cas de rupture des moyens de fixation 4, lorsque l'assemblage 1 est monté sur la planche de bord 2. En cas de choc subi par le véhicule selon l'invention, les moyens de fixation 4 sont susceptibles de rompre en raison, par exemple, de leur fragilité. Ainsi, en cas de rupture des moyens de fixation 4, l'élément d'habillage 3 ne peut s'éloigner de l'élément structurel 7 que de manière limitée, évitant ainsi que l'élément d'habillage 3 ne soit qualifié de pièce volante lors de la mise en oeuvre d'une procédure de choc normalisée.

Dans l'exemple illustré sur la figure, les moyens de retenue 10 comprennent une première languette 11, faisant saillie d'un élément d'habillage 3, qui présente un orifice 12 pour permettre l'introduction d'une deuxième languette 13 des moyens de retenue 10. La deuxième languette 13 fait saillie de l'élément structurel 7. Comme illustré sur la figure, la deuxième languette 13 présente une extrémité libre 14 formant un harpon. Avantageusement, l'extrémité libre 14 est conformée pour pouvoir être introduite dans l'orifice 12 par déformation. L'extrémité libre 14 est également conformée pour que le harpon empêche l'extrémité libre 14 de sortir de l'orifice 12 une fois introduite dans l'orifice 12.

Avantageusement, les première 11 et deuxième 13 languettes viennent de matière avec l'élément structurel 7 ou l'élément d'habillage 3 correspondant. Par exemple, les première 11 et deuxième 13 languettes sont obtenues par moulage d'une matière plastique.

Afin de faciliter le montage de l'assemblage 1 sur la planche de bord, les première 11 et deuxième 13 languettes s'étendent perpendiculairement l'une à l'autre dans l'assemblage 1. De manière alternative, les première 11 et deuxième 13 languettes s'étendent suivant des directions de correspondant aux directions de montage respectives de l'élément d'habillage 3 et de l'élément structurel 7 lors du montage de l'assemblage 1.

Ainsi, dans une situation de choc subi par le véhicule selon l'invention, en cas de rupture des moyens de fixation 4, l'élément d'habillage 3 reste relié à l'élément structurel 7 par les moyens de retenue 10. L'élément d'habillage 3 reste alors à une distance de l'élément structurel 7, qui correspond à la longueur des première 11 et deuxième 13 languettes. En effet, l'extrémité libre 14 reste retenue dans l'orifice 12 de la première languette 11 lorsque l'élément d'habillage 3 se déplace.

L'invention ne se limite pas au mode de réalisation de l'assemblage décrit ci-avant, seulement à titre d'exemple, mais d'autres modes de réalisation peuvent être conçus par l'homme de métier sans sortir du cadre et de la portée de la présente invention.

## Revendications

1. Assemblage (1) pour une planche de bord (2) d'un véhicule automobile comprenant au moins un élément d'habillage (3), chacun étant conçu pour former une partie de l'habillage de la planche de bord (2) et pour être fixé à la planche de bord (2) par des moyens de fixation (4), l'assemblage (1) comprenant en outre un élément structurel (7) conçu pour être disposé dans la planche de bord (2), l'assemblage (1) comprenant des moyens de retenue (10) conçus pour relier chaque élément d'habillage (3) à l'élément structurel (7) de sorte à limiter l'éloignement de chaque élément d'habillage (3) par rapport à l'élément structurel (7) pour limiter ses déplacements dans l'habitacle en cas de rupture des moyens de fixation (4), lorsque l'assemblage (1) est monté sur la planche de bord (2).

2. Assemblage (1) selon la revendication 1, **caractérisé en ce que** les moyens de retenue (10) comprennent une première languette (11) faisant saillie d'un des éléments d'habillage (3) et structurel (7) et présentant un orifice (12) pour permettre l'introduction d'une deuxième languette (13) des moyens de retenue (10) faisant saillie de l'autre des éléments d'habillage (3) et structurel (7).

3. Assemblage (1) selon la revendication 2, **caractérisé en ce que** la deuxième languette (13) présente une extrémité libre (14) formant un harpon.

4. Assemblage (1) selon la revendication 2 ou 3, **caractérisé en ce que** les première (11) et deuxième (13) languettes s'étendent perpendiculairement l'une à l'autre dans l'assemblage (1).

5. Assemblage (1) selon l'une des revendications 1 à 4, **caractérisé en ce qu'**un élément d'habillage (3) est un insert (6) pour reposer les doigts conçu pour s'étendre sur au moins une partie d'un pourtour d'un écran.

6. Planche de bord (2) comprenant au moins un assemblage (1) selon l'une des revendications 1 à 5, l'élément structurel (7) étant fixé dans la planche de bord (2).

7. Véhicule automobile comprenant une planche de bord (2) selon la revendication 6.
